# EUROPEAN PATENT APPLICATION

(11) **EP 1 657 635 A2**
(43) Date of publication of application: **17.05.2006**
(21) Application number: 04031067.4
(22) Date of filing: 30.12.2004
(51) Int. Cl.: G06F 9/44

(54) **System and method for a controller to define, determine and execute cross-application processes**

(30) Priority: 08.10.2004 US 962013
(71) Applicant: SAP AG, 69190 Walldorf (DE)
(72) Inventor: Seufert, Timo, 67346 Speyer (DE); Schwarzmann, Winfried, 69231 Rauenberg (DE); Kumar, Amar, 68809 Neulussheim (DE)
(74) Representative: Röthinger, Rainer

(57) **Abstract**

Embodiments of the invention are generally directed to providing flexible process configurations for software systems and to the execution of those software systems. In one embodiment, a user may use a cross-application process controller to select and arrange the methods that constitute a software system. In an embodiment, the cross-application process controller receives input and executes the selected methods based, at least in part, on the received input.

## Description

### TECHNICAL FIELD

Embodiments of the invention generally relate to the field of data processing and, more particularly, to a system and method for a controller to define, determine, and execute cross-application processes.

### BACKGROUND

In the past, enterprises were willing to reorganize their business processes to fit them into the relatively static structures of business software systems. More recently, however, enterprises have been more reluctant to reorganize their business processes for reasons such as the expense incurred by the reorganization. In addition, many enterprises are interested in retaining (rather than changing) business processes that have proved to be successful.

A conventional approach to providing more flexible business software systems involves the configuration of system process flows with parameters. The individual values of these parameters are set during customization of the software and respected by the processes during runtime. The configuration of process flows via parameters, however, is encumbered by a number of limitations. For example, the way in which certain parameter values influence the process flow within the system is not always clear to a user. This limitation can be partly addressed through thorough documentation and/or the expertise provided by consultants. Either of these partial solutions, however, increases the costs of the software implementation.

A second limitation of the conventional approach is that the complexity of the coding of business software increases disproportionately with the number of parameters. The increase in the complexity of the coding leads to a greater possibility of coding faults, especially for unusual parameter value combinations. This complexity and the resulting maintenance and support challenges cause functional extensions of the software to be developed more slowly or not at all.

### SUMMARY OF THE INVENTION

Embodiments of the invention are generally directed to providing flexible process configurations for software systems and to the execution of those flexible process configurations. In one embodiment, a user may use a cross-application process controller to select and arrange the methods that constitute a software system. In an embodiment, the cross-application process controller receives input and executes the selected methods based, at least in part, on the received input.

### BRIEF DESCRIPTION OF THE DRAWINGS

Embodiments of the invention are illustrated by way of example, and not by way of limitation, in the figures of the accompanying drawings in which like reference numerals refer to similar elements.
**Figure 1** is a block diagram of selected elements of a cross-application process controller, according to an embodiment of the invention.
**Figure 2** is a block diagram illustrating a data-oriented view of a service controller, according to an embodiment of the invention.
**Figure 3** is a block diagram showing additional details of a data-oriented view of a service controller, according to an embodiment of the invention.
**Figure 4** is a block diagram illustrating selected aspects of a graphical user interface to define a strategy according to an embodiment of the invention.
**Figure 5** is a block diagram illustrating the determination of a strategy, according to an embodiment of the invention.
**Figure 6** is a block diagram illustrating the addition of a new method to a method pool, according to an embodiment of the invention.
**Figure 7** is a block diagram illustrating a method data handling infrastructure, according to an embodiment of the invention.
**Figure 8** is a block diagram illustrating a class-oriented view of a service controller, according to an embodiment of the invention.
**Figures 9A-9B** are flow diagrams illustrating certain aspects of a method for a service controller, according to an embodiment of the invention.

### DETAILED DESCRIPTION

Embodiments of the invention are generally directed to providing flexible process configurations for software systems and to the execution of those flexible process configurations. In one embodiment, a user may use a cross-application process controller to select and arrange the methods that constitute a software system. In an embodiment, the cross-application process controller receives input and executes the selected methods based, at least in part, on the received input.

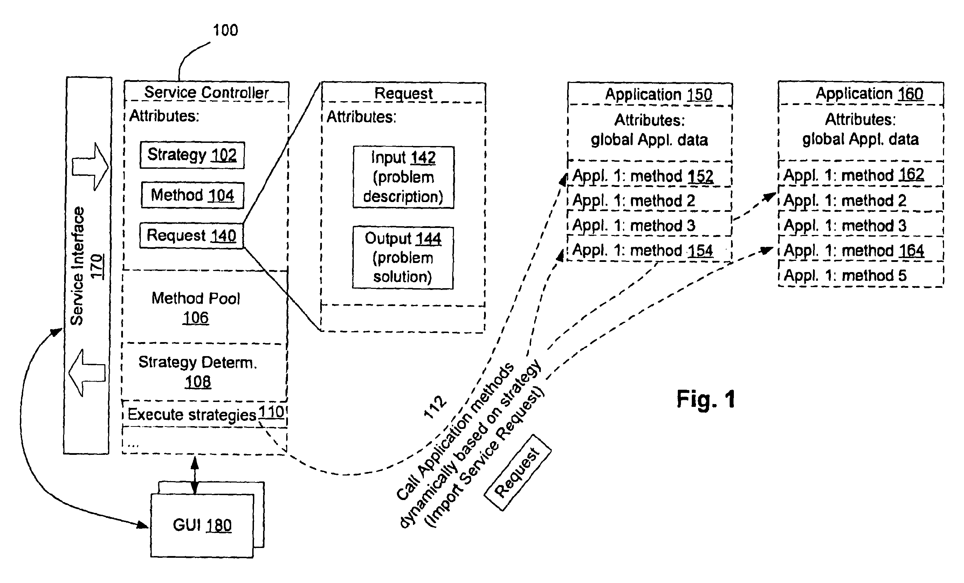

FIG. 1 is a block diagram of selected elements of cross-application process controller 100, according to an embodiment of the invention. In an embodiment, cross-application process controller 100 may be part of a multi-tiered network. The multi-tiered network may be implemented using a variety of different application technologies at each of the layers of the multi-tier architecture, including those based on the Java 2 Enterprise Edition™ ("J2EE") specification (e.g., the Websphere platform developed by IBM Corporation), the Microsoft .NET platform, and/or the Advanced Business Application Programming ("ABAP") platform developed by SAP AG. The J2EE specification refers to any of the J2EE specifications including, for example, the Java 2 Enterprise Edition Specification v1.3, published on July 27, 2001.

The illustrated embodiment of cross-application process controller 100 includes strategy 102, method(s) 104, request 140, method pool 106, strategy determination logic 108, and strategy execution logic 110. In an alternative embodiment, cross-application process controller 100 may have more elements, fewer elements, and/or different elements. In an embodiment, cross-application process controller 100 (or, for ease of reference, service controller 100) provides a framework which allows the definition of various software services. These services may be based, at least in part, on a strategy 102 that is defined for each request 140. Alternatively, service controller 100 may use strategy determination logic 108 to determine a strategy (e.g., strategy 102) for a given request (e.g., request 140). As is further described below, service controller 100 also provides a framework to execute strategy 102.

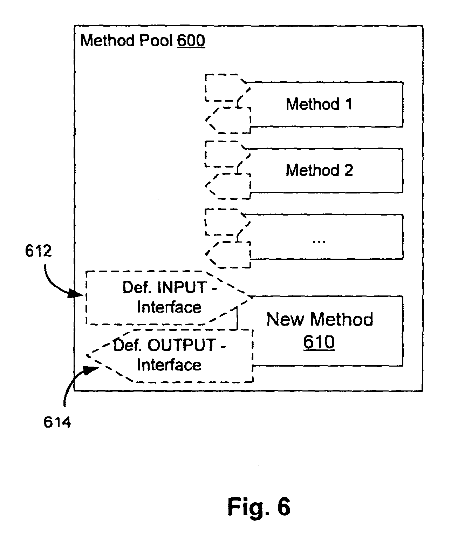

Method 104 provides a logical processing element for a cross-application process. Method 104 may provide new functionality (e.g., a new method) or may encapsulate existing functionality from various applications. Each method 104 is designed to be as technically independent as possible to enhance the flexibility of strategy 102. In some cases, however, method 104 may share a fixed relationship with one or more other methods. For example method 104 may share coding with one or more other methods. As is further described below with reference to FIG. 6, each method 104 shares the same interface. In an embodiment, method pool 106 encompasses all of the methods which may be used to define strategy 102.

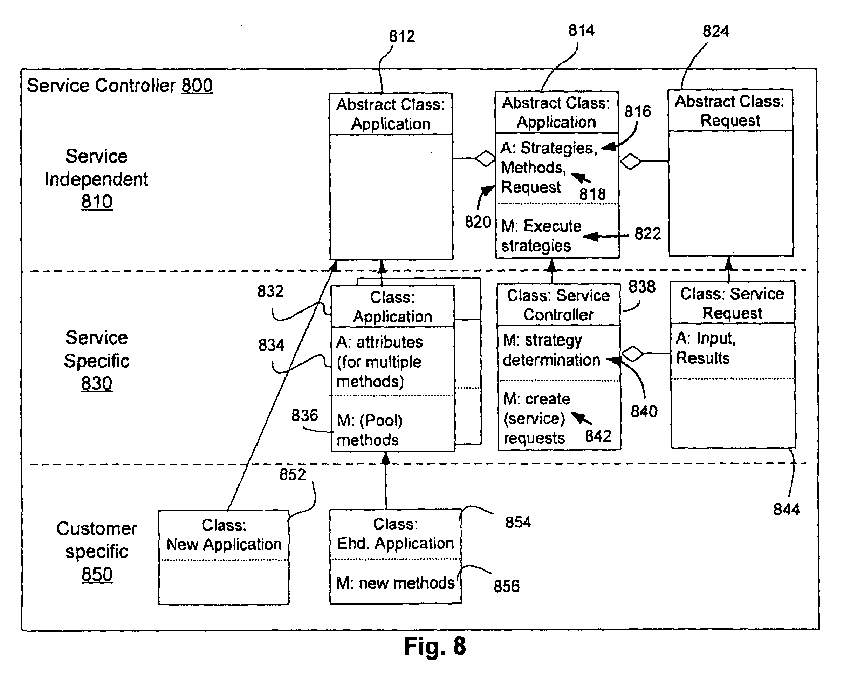

Graphical User Interface(s) (GUI) 180 provide one or more user interfaces to service controller 100. In one embodiment, GUI 180 is a stand-alone GUI. The term "stand-alone" refers to a GUI that functions independently of a Web browser. In one embodiment, a first GUI 180 provides an interface to a service independent layer of service controller 100. The service independent layer GUI 180 may be used, for example, to access one or more abstract classes of the service independent layer. The service independent layer is further described below with reference to FIG. 8.

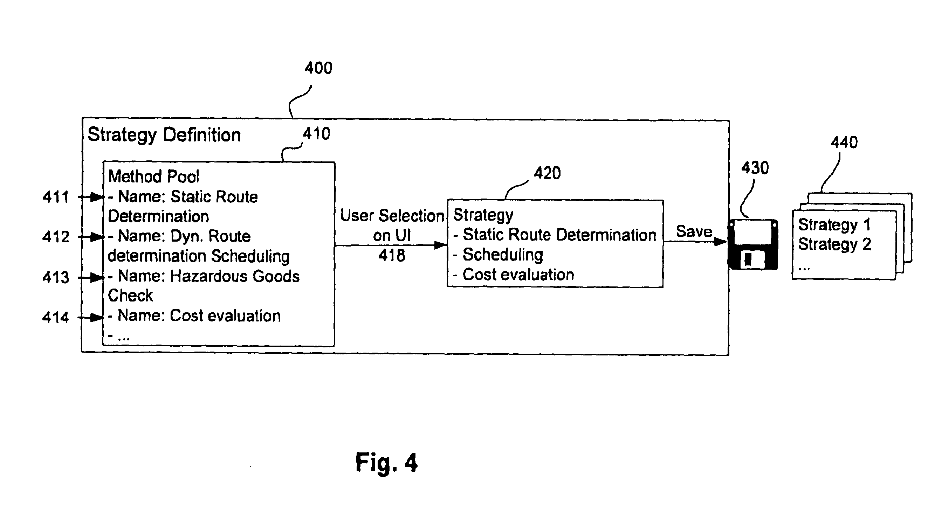

A second GUI may provide access to a service specific layer of service controller 100. For example, a service specific layer GUI 180 may be used to define strategy 102 as is further described below with reference to FIG. 4. In such an embodiment, GUI 180 may display method pool 106 to the user. The user may then select and arrange methods from method pool 106 to define strategy 102.

Strategy 102 groups one or more methods (e.g., method 104) from method pool 106. In an embodiment, strategy 102 determines the order in which the grouped methods are executed. This order may be constrained, in part, by the relationships, if any, among the methods. For example, if two methods are selected for strategy 102 and they share a predecessor/successor relationship, then that relationship may partly determine the ordering of those two methods. In addition, the predecessor/successor relationship may determine that strategy 102 should include both methods to be valid. Defining strategy 102 is further described below with reference to FIG. 4.

In an embodiment request 140 is an object that represents demands placed on the implemented service. For example, the illustrated embodiment of request 140 includes input 142 and output 144. Input 142 provides fields and/or methods describing, for example, a business problem to be solved by the implemented service. Output 144 provides fields and/or methods describing a solution to the problem. Service controller 100 constructs request 140 and processes it. In an embodiment, processing request 140 includes passing it to the methods of strategy 102.

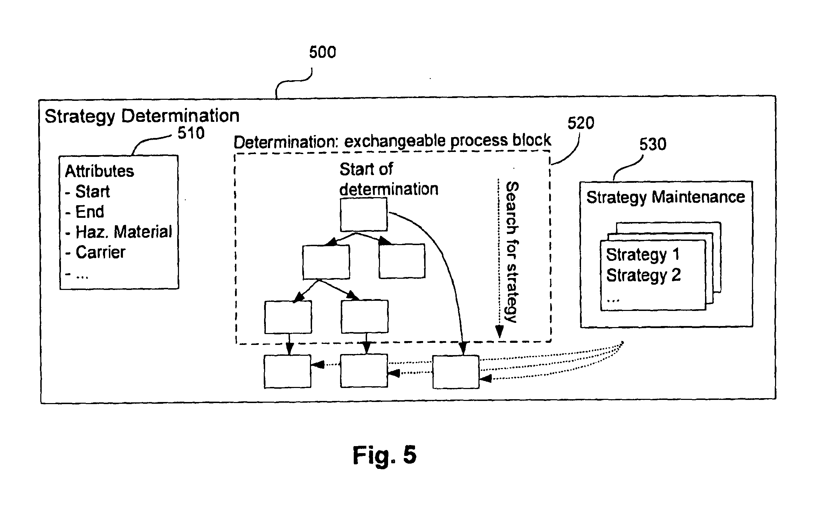

In an embodiment, each request 140 is associated with a strategy 102. The association may be explicitly determined by input received through service interface 170. Alternatively, service controller 100 may use strategy determination logic 108 to select a strategy for request 140. Strategy determination is further described below with reference to FIG. 5.

Application classes 150 and 160 provide the methods for method pool 106. Each of the methods in method pool 106 is associated with an application class (e.g., application class 150 and 160). In an embodiment, each method may store data that it produces in its associated application class. Other methods of the application class may access the data that the method stores in the application class. In addition, service controller 100 may access data stored in the application class to enhance a result before passing the result through service interface 170.

Strategy execution logic 110 provides logic to execute the methods of a strategy (e.g., strategy 102). In an embodiment, strategy execution logic 110 dynamically calls the methods of strategy 102 as shown by 112. Strategy execution logic 110 may pass request 140 to each method of strategy 102 in the order defined by strategy 102. For example, strategy 102 may dictate that strategy execution logic 110 execute methods 152, 154, 162, and 164 and may further dictate that they are executed in that order. Strategy execution logic 110 may pass request 140 to each of methods 152, 154, 162, and 164, as it dynamically calls the methods.

Service interface 170 is an input/output interface. In an embodiment, service interface 170 is a service-specific interface. The term "service-specific" refers to an implementation that is specific to a particular cross-application process.

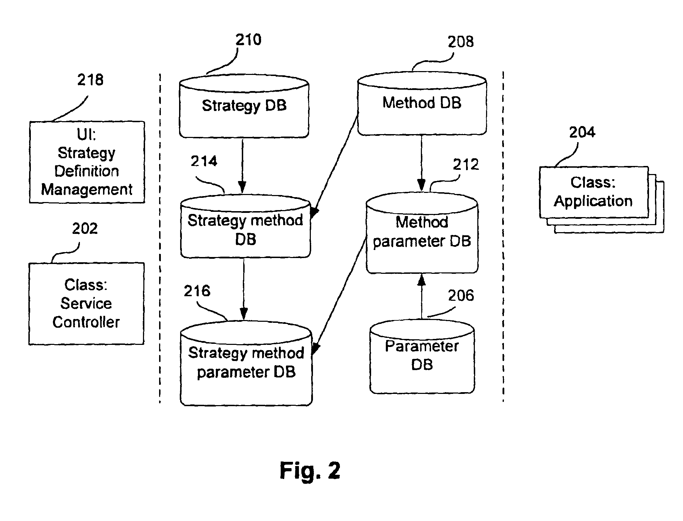

FIG. 2 is a block diagram illustrating a data-oriented view of a service controller, according to an embodiment of the invention. In an embodiment, a service controller includes a framework to define and organize parameters, methods, and strategies to create a service-specific instance of a service controller based on one or more abstract classes (e.g., service controller class 202 and application class 204).

In one embodiment, a service controller includes parameter database 206. Parameter database 206 provides a source of information with which the service controller can define parameters in a logical way. This information includes parameter types that define the syntactic and semantic properties of operational parameters. The parameter types may be, generally, available to the methods of the service provider. For example, the methods executed in the service controller may use parameters that are defined in parameter database 206.

In one embodiment, the service controller includes method database 208. Method database 208 provides a source of information with which the service controller can define methods in a logical way. This information includes method types that define the syntactic and semantic properties of operational methods. The method types may be, generally, available to the strategies of the service provider. For example, the methods executed in the service controller may be defined in method database 208.

In one embodiment, the service controller includes strategy database 210. Strategy database 210 provides a source of information with which the service controller can define strategies in a logical way. This information includes strategy types that define the syntactic and semantic properties of operational strategies. The strategy types may be, generally, available to the service provider. For example, the strategies executed in the service controller may be defined in strategy database 210.

In an embodiment, method parameter database 212 includes method parameters based on parameter types from parameter database 206 that work with methods based on method types from method database 208. Similarly, strategy method database 214 includes methods that are based on the method types of method database 208. Default values may be assigned to the method parameters of method parameter database 212 and the strategy methods of strategy method database 214. Strategy method parameter database 216 includes method parameters for the methods of strategy method database 214. In an embodiment, application class 204 is an abstract application class that includes one or more methods available to one or more strategies.

User interface 218 is an interface that allows a user to access the data of the various databases shown in FIG. 2. For example, a user may define parameters based on the parameter types of parameter database 206. Similarly, the user may define methods based on the method types of method database 208. In addition, the user may define one or more strategies using user interface 218.

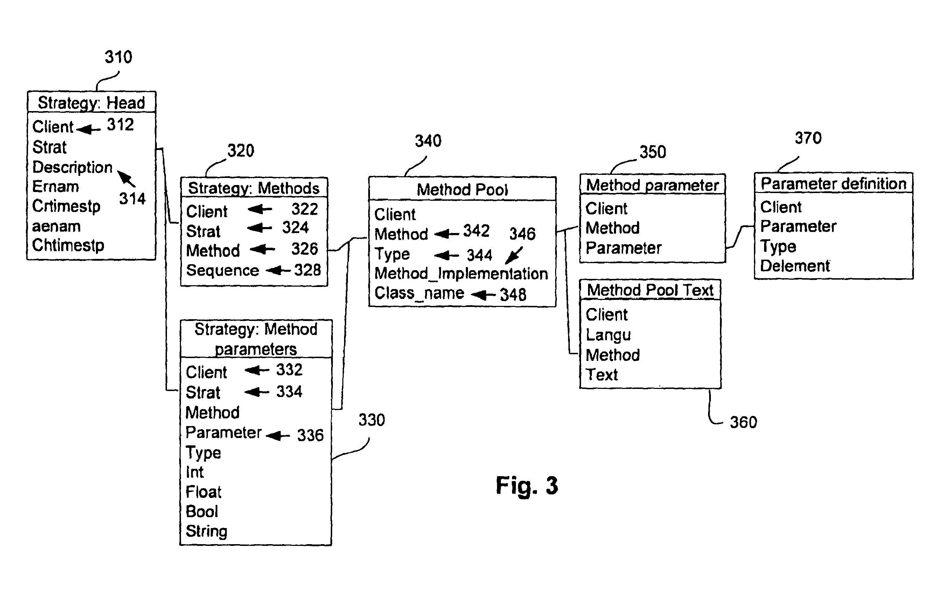

FIG. 3 is a block diagram showing additional details of a data-oriented view of a service controller, according to an embodiment of the invention. The illustrated data-oriented view includes strategy 310. Strategy 310 includes metadata such as a client identifier 312 and a description 314. Strategy 310 also includes methods 320 and method parameters 330. Methods 320 and method parameters 330 each include client and strategy identifiers as shown by 322-324 and 332-334. Method 320 also includes one or more methods 326 and sequence 328 to specify a sequence for the methods. Method parameters 330 includes method parameters 336 for use in methods 320.

Methods 320 are drawn from method pool 340. In an embodiment, for each method 342, method pool 340 includes information such as type 344, implementation 346, and/or class name 348. Method parameter 350 is a parameter of a method in method pool 340 and is based on parameter definition 370. Method pool text 360 provides text (e.g., method descriptions, method names, etc.) for one or more methods of method pool 340.

FIG. 4 is a block diagram illustrating selected aspects of a graphical user interface (GUI) 400, according to an embodiment of the invention. In one embodiment, GUI 400 provides an interface to define a strategy. GUI 400 includes, for example, method pool 410 and strategy 420. Method pool 410, in turn, includes methods 411-414. Methods 411-414 may be provided by a vendor or defined by a customer. As shown in FIG. 4, in one embodiment, GUI 400 displays a name and a description for each of the one or more methods in method pool 410. In an embodiment, methods 411-414 are selectable via a cursor control device. The term "cursor control device" broadly refers to an input/output device that moves a cursor within a graphical user interface. Examples of a cursor control device include (and are not limited to) a pointing device and/or a keyboard.

In one embodiment, method pool 410 is displayed in a first window of GUI 400 and strategy 420 is displayed in a second window of GUI 400. In an alternative embodiment, method pool 410 and strategy 420 may be displayed (or partly displayed) in more windows and/or fewer windows of GUI 400. The term "window" refers to a scrollable viewing area on a screen.

In an embodiment, a user selects one or more methods from method pool 410 for inclusion in strategy 420. For example, the user may drag and drop a method from method pool 410 to strategy 420. Alternatively, the user may provide another indication to assign a method to strategy 420 such as right clicking on the method, left clicking on the method, and the like. In addition, the user may arrange the selected methods in a particular order or otherwise specify a sequence in which the methods are to be executed. Strategy 420 is stored in memory 440 which may be, for example, one or more hard disks, floppy disks, ZIP disks, compact disks (e.g., CD-ROM), digital versatile/video disks (DVD), magnetic random access memory (MRAM) devices, and other system-readable media that store instructions and/or data. In an embodiment, one or several strategies may be stored in memory 430 as shown by 440.

In one embodiment, the service controller checks the validity of strategy 420 before saving it to memory 440. For example, the service controller may determine whether any method of strategy 420 shares a predecessor/successor relationship with another method. If a method of strategy 420 does share a predecessor/successor relationship with another method, the service controller may ensure that the sequence of the methods of strategy 420 does not conflict with the relationship. The service controller may also ensure that strategy 420 includes all of the methods that are part of the relationship.

FIG. 5 is a conceptual illustration of determining a strategy according to an embodiment of the invention. Strategy determination process 500 includes attributes 510, determination logic 520, and strategy maintenance logic 530. Attributes 510 are provided by a user through, for example, a service interface (e.g., service interface 170, shown in FIG. 1). Attributes 510 specify the attributes of a business problem that is to be solved by the service controller. For example, in the illustrated embodiment, attributes 510 are the attributes of a routing problem and include the start of the route, the end of the route, the carrier, etc. Strategy determination logic 520 determines which of the previously defined strategies in strategy maintenance logic 530 should be applied to attributes 510. In one embodiment, strategy determination logic 520 determines the appropriate strategy based, at least in part, on an exchangeable process block algorithm. In an alternative embodiment, strategy determination logic 520 may include an additional algorithm and/or a different algorithm.

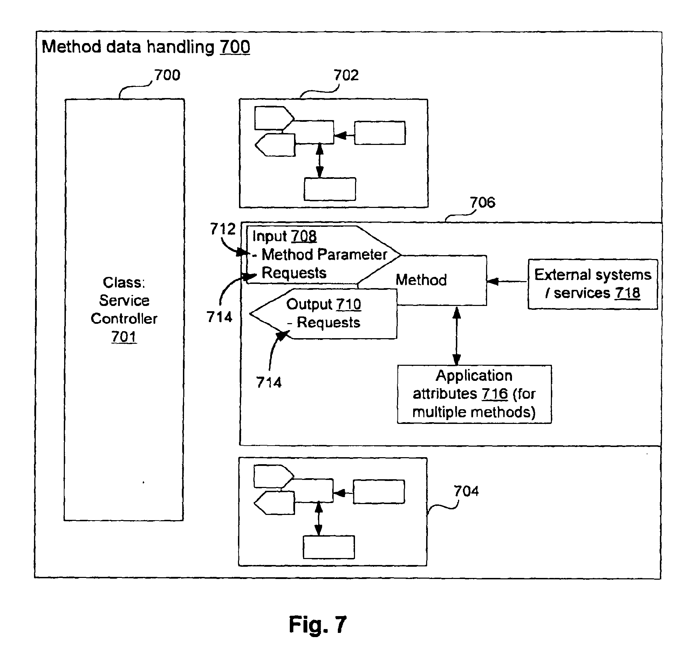

In an embodiment, a user may provide new functionality to the strategies of a service controller by defining a new method and adding it to a method pool. FIG. 6 is a conceptual diagram illustrating the addition of a new method to method pool 600, according to an embodiment of the invention. In an embodiment, the user may create a new method based on a method type from a method database, (e.g., method database 208, shown in FIG. 2) via a GUI (e.g., GIU 180, shown in FIG. 1) or other user interface. New method 610 may then be added to method pool 600 using the GUI. In an embodiment, the user defines an input interface 612 and an output interface 614 to enable new method 610 to input and output a request object (e.g., request 140, shown in FIG. 1). Interfaces 612-614 are further described below with reference to FIG. 7.

FIG. 7 is a block diagram illustrating method data handling infrastructure 700 according to an embodiment of the invention. Service controller 701 includes methods 702-706. In one embodiment, all of the methods of service controller 701 implement the same interface. In such an embodiment, the methods can be anonymously executed. The term "anonymously executed" indicates that the service controller calls the methods without knowing which methods are actually invoked. An example of this interface is described with reference to method 706 but it is to be appreciated that methods 702-704 implement a similar interface. In an embodiment, the interface includes input structure 708 and output structure 710. Input structure 708 receives method parameter(s) 712 and request 714 from, for example, strategy execution logic (e.g., strategy execution logic 110, shown in FIG. 1). Method parameter(s) 712 includes one or more method parameters that define a problem for a software process. In one embodiment, a user provides parameters 712 to service controller 701 via a service interface (e.g., service interface 170, shown in FIG. 1).

In an embodiment, request 714 includes both a data object describing the problem and a data object for storing solutions to the problem. In one embodiment, a strategy of service controller 701 passes method parameter(s) 712 and requests 714 to method 706. Method 706 processes requests 714 based, at least in part, on parameters 712 and returns requests 714 to service controller 701 through output structure 710. Service controller 700 has access to the data of method 706 and determines whether to pass the data back through the service interface.

As described above, service controller 701 includes one or more application classes (e.g., application classes 150 and 160) to provide methods for the service controller. Each method is associated with a particular application class. The data that method 706 produces may be stored in its associated application class. In addition, the associated application class may have one or more application attributes 716 that define global application data. In an embodiment, the behavior of method 706 is based, partly, on application attributes 716.

In one embodiment, method 706 accesses external systems and/or services 718 to obtain data. The behavior of method 706 may also be based, partly, on the data obtained from external systems and/or services 718. For example, method 706 may access external systems and/or services 718 to calculate a cost and then process request 714 based, partly, on the result of the cost calculation.

FIG. 8 is a block diagram illustrating a class-oriented view of a service controller 800, according to an embodiment of the invention. Service controller 800 includes service independent layer 810, service specific layer 830, and customer specific layer 850. In general, the classes in each successive layer are derived from the classes in the proceeding layer. Thus, in an embodiment, service controller 800 may have a predecessor layer (e.g., service independent layer 810) but not yet have a succeeding layer (e.g., service specific layer 830).

Service independent layer 810 includes abstract application class 812, abstract controller class 814, and abstract request class 824. An abstract class refers to a class (e.g., a superclass) that provides class members (e.g., fields and/or methods) for one or more subclasses. In the illustrated embodiment, abstract application class 812 includes one or more abstract application fields and/or methods. Similarly, abstract request class 824 includes one or more abstract request fields and/or methods.

Abstract controller class 814 provides an abstract class upon which concrete controller subclasses may be based. The class members of abstract controller class 814 may be based, at least in part, on abstract application class 812 and abstract request class 824. For example, strategies 816, methods 818, and requests 820 of abstract controller class 814 may be based, at least in part, on the members of abstract classes 812 and 824.

Service specific layer 830 includes classes that may be instantiated to provide functionality for a specific service (e.g., a routing service in a transportation management program). For example, application class 832 may be a concrete class derived from abstract application class 812. Similarly, service controller class 838 may be a concrete class derived from abstract controller class 814.

Application class 832 includes one or more attributes 834 that define global application data for the methods 836. Strategy determination logic 840 includes service specific strategy determination logic for service controller 838. Similarly, method 842 provides logic to create requests for service controller class 838. Request class 844 provides classes to define requests including, for example, input components and output components of the request.

The flexible framework of service controller 800 enables a customer to extend the functionality of the controller. Customer specific layer 850, for example, includes new application class 852 and enhanced application class 854. New application class 852 is a new application class derived from abstract application class 812. Enhanced application class 854 is a service specific class that includes new method(s) 856.

In an alternative embodiment, service controller 800 is not (or, at least, is not completely) based on object-oriented classes and methods. For example, in an embodiment, service controller 800 is based (or is partly based) on an interpretable programming language such as ABAP. In such an embodiment, anonymous method execution is supported by features such as dynamic function calling.

Turning now to FIG. 9, the particular methods associated with embodiments of the invention are described in terms of computer software and hardware with reference to a flowchart. The methods to be performed by a computing device (e.g., an application server) may constitute state machines or computer programs made up of computer-executable instructions. The computer-executable instructions may be written in a computer programming language or may be embodied in firmware logic. If written in a programming language conforming to a recognized standard, such instructions can be executed on a variety of hardware platforms and for interface to a variety of operating systems. In addition, embodiments of the invention are not described with reference to any particular programming language. It will be appreciated that a variety of programming languages may be used to implement embodiments of the invention as described herein. Furthermore, it is common in the art to speak of software, in one form or another (e.g., program, procedure, process, application, etc.), as taking an action or causing a result. Such expressions are merely a shorthand way of saying that execution of the software by a computing device causes the device to perform an action or produce a result.

FIG. 9A is a flow diagram illustrating certain aspects of a method for defining a strategy, according to an embodiment of the invention. Referring to process block 910, the service controller receives input selecting a method from a method pool. The received input may be input from a GUI (e.g., GUI 180, shown in FIG. 1) such as an indication from a keyboard, pointing device, touch screen, and the like. The selected method is added to a strategy via, for example, the GUI at 920. Referring to process block 930, the service controller receives input specifying an order for the one or more methods of the strategy. In an embodiment, the received input is any indication of a sequence for the methods of the strategy. For example, the received input may be an indication of the order of the methods displayed in the GUI. The strategy is saved to a memory (e.g., memory 430, shown in FIG. 4) at 940. The process may be repeated to define another strategy at 945.

FIG. 9B is a flow diagram illustrating certain aspects of a method for a service controller, according to an embodiment of the invention. Referring to process block 950, the service controller may receive input describing a problem through a service interface (e.g., service interface 170, shown in FIG. 1). For example, the service controller may receive a collection of attributes (e.g., attributes 510, shown in FIG. 5) that, at least partly, describe a business problem such as route determination. Referring to process block 960, the service controller may create a service request (e.g., request 140, shown in FIG. 1) based, at least in part, on the received input. Creating a service request includes, for example, instantiating a service request object from a service request class (e.g., service request class 844, shown in FIG. 8).

Referring to process block 970, the strategy may be executed based, at least in part, on the service request. For example, the service controller may pass the service request to each method of the strategy. In one embodiment, each method of the strategy is anonymously executed. The term "anonymously executed" indicates that the service controller calls the methods without knowing which methods are actually invoked. In an embodiment, each method implements the same interface to facilitate anonymous method execution.

In an embodiment, the service controller may receive input (e.g., from the GUI) to define a new method. The new method may be based, at least in part, on a method type in a method database (e.g., method database 208, shown in FIG. 2). Similarly, the service controller may receive input to define a new parameter. The new parameter may be based, at least in part, on a parameter type in a parameter database (e.g., parameter database 206, shown in FIG. 2). In an embodiment, the new parameter may be added to a method of the strategy and/or the new method may be added to the strategy.

Elements of embodiments of the present invention may also be provided as a machine-readable medium for storing the machine-executable instructions. The machine-readable medium may include, but is not limited to, flash memory, optical disks, compact disks-read only memory (CD-ROM), digital versatile/video disks (DVD) ROM, random access memory (RAM), erasable programmable read-only memory (EPROM), electrically erasable programmable read-only memory (EEPROM), magnetic or optical cards, propagation media or other type of machine-readable media suitable for storing electronic instructions. For example, embodiments of the invention may be downloaded as a computer program which may be transferred from a remote computer (e.g., a server) to a requesting computer (e.g., a client) by way of data signals embodied in a carrier wave or other propagation medium via a communication link (e.g., a modem or network connection).

It should be appreciated that reference throughout this specification to "one embodiment" or "an embodiment" means that a particular feature, structure or characteristic described in connection with the embodiment is included in at least one embodiment of the present invention. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the invention.

Similarly, it should be appreciated that in the foregoing description of embodiments of the invention, various features are sometimes grouped together in a single embodiment, figure, or description thereof for the purpose of streamlining the disclosure aiding in the understanding of one or more of the various inventive aspects. This method of disclosure, however, is not to be interpreted as reflecting an intention that the claimed subject matter requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

## Claims

1. A method comprising:
receiving input selecting a method from a method pool of a cross-application process controller, the method pool including a plurality of methods to provide functionality for a cross-application process;
adding the method to a strategy, wherein the strategy includes one or more methods of the cross-application process;
receiving input specifying an order for the one or more methods of the strategy; and
saving the strategy in a strategy database of the cross-application process controller.

2. The method of claim 1, further comprising:
receiving input defining a new method based, at least in part, on a method type definition provided by a method database of the cross-application process controller; and
adding the new method to the strategy.

3. The method of claim 1, further comprising:
receiving input defining a new parameter based, at least in part, on a parameter type definition of a parameter database of the cross-application process controller, and
providing the new parameter to the method to alter a function of the method.

4. A method comprising:
receiving a user input from a service interface of a cross-application process controller;
creating a service request based, at least in part, on the user input; and
executing a strategy based, at least in part, on the service request, wherein the strategy includes one or more methods.

5. The method of claim 4, wherein executing the strategy based, at least in part, on the service request comprises:
passing the service request to each of the one or more methods of the strategy.

6. The method of claim 4, wherein the user input identifies the strategy.

7. The method of claim 4, wherein the user input includes one or more attributes and the cross-application process controller determines the strategy for the user input based, at least in part, on the one or more attributes.

8. The method of claim 4, wherein executing the strategy based, at least in part, on the service request comprises:
executing each method of the strategy in a specified order..

9. The method of claim 8, wherein executing each method of the strategy in the specified order comprises:
executing each method of the strategy anonymously in the order specified.

10. The method of claim 4, wherein the user input includes a parameter value and wherein creating the service request based, at least in part, on the user input comprises:
creating the service request based, at least in part, on the parameter value.

11. A controller to define and execute a cross-application process comprising:
a method pool including one or more methods to provide functionality for the cross-application process;
a strategy to specify which of the one or more methods of the method pool are part of the of the cross-application process; and
an application class to provide the one or more methods of the method pool.

12. The controller of claim 11, further comprising:
a method database to provide one or more method type definitions, wherein each method type definition provides a mechanism to define a new method.

13. The controller of claim 11, further comprising:
a parameter database to provide one or more parameter type definitions, wherein each parameter type definition provides a mechanism to define a new parameter.

14. The controller of claim 11, further comprising:
a graphical user interface to enable a user to define the strategy based, at least in part, on the one or more methods of the method pool.

15. The controller of claim 11, wherein each of the one or more methods of the method pool shares a common interface.

16. The controller of claim 15, wherein the common interface includes:
an input structure for one or more parameters; and
an input/output structure for one or more request objects.

17. A system comprising:
means for receiving input selecting a method from a method pool of a cross-application process controller, the method pool including a plurality of methods to provide functionality for a cross-application process;
means for adding the method to a strategy, wherein the strategy includes one or more methods of the cross-application process;
means for receiving input specifying an order for the one or more methods of the strategy; and
means for saving the strategy in a strategy database of the cross-application process controller.

18. The system of claim 17, further comprising:
means for receiving input defining a new method based, at least in part, on a method type definition provided by a method database of the cross-application process controller; and
means for adding the new method to the strategy.

19. The system of claim 17, further comprising:
means for receiving input defining a new parameter based, at least in part, on a parameter type definition of a parameter database of the cross-application process controller; and
means for providing the new parameter to the method to alter a function of the method.

20. The system of claim 17, further comprising:
means for receiving a user input from a service interface of the cross-application process controller;
means for creating a service request based, at least in part, on the user input; and
means for executing the strategy based, at least in part, on the service request.

21. The system of claim 20, wherein the means for executing the strategy based, at least in part, on the service request comprises:
means for passing the service request to each of the one or more methods of the strategy.

22. The system of claim 20, wherein the means for executing the strategy based, at least in part, on the service request comprises:
means for executing each method of the strategy in the order specified.

23. The system of claim 22, wherein the means for executing each method of the strategy in the order specified comprises:
means for executing each method of the strategy anonymously in the order specified

24. An article of manufacture comprising:
an electronically accessible medium providing instructions that, when executed by an apparatus, cause the apparatus to
receive input selecting a method from a method pool of a cross-application process controller, the method pool including a plurality of methods to provide functionality for a cross-application process;
add the method to a strategy, wherein the strategy includes one or more methods of the cross-application process;
receive input specifying an order for the one or more methods of the strategy; and
save the strategy in a strategy database of the cross-application process controller.

25. The article of manufacture of claim 24, wherein the electronically accessible medium provides further instructions that, when executed by the apparatus, cause the apparatus to:
receive input defining a new method based, at least in part, on a method type definition provided by a method database of the cross-application process controller; and
add the new method to the strategy.

26. The article of manufacture of claim 24, wherein the electronically accessible medium provides further instructions that, when executed by the apparatus, cause the apparatus to:
receive input defining a new parameter based, at least in part, on a parameter type definition of a parameter database of the cross-application process controller; and
provide the new parameter to the method to alter a function of the method.

27. The article of manufacture of claim 24, wherein the electronically accessible medium provides further instructions that, when executed by the apparatus, cause the apparatus to:
receive a user input from a service interface of the cross-application process controller;
create a service request based, at least in part, on the user input; and
execute the strategy based, at least in part, on the service request.

28. The article of manufacture of claim 27, wherein the instructions that, when executed by the apparatus, cause the apparatus to execute the strategy based, at least in part, on the service request cause the apparatus to:
pass the service request to each of the one or more methods of the strategy.

29. The article of manufacture of claim 27, wherein the instructions that, when executed by the apparatus, cause the apparatus to execute the strategy based, at least in part, on the service request cause the apparatus to:
execute each method of the strategy in the order specified.

30. The article of manufacture of claim 29, wherein the instructions that, when executed by the apparatus, cause the apparatus to execute each method of the strategy in the order specified cause the apparatus to:
execute each method of the strategy anonymously in the order specified.

31. A graphical user interface for interacting with a service controller comprising:
a method pool having one or more methods selectable via a cursor control device, each of the one or more methods representing a method of the service controller; and
a strategy to specify a process flow wherein, upon selecting one of the one or more methods in the method pool, the method is assigned to the strategy.

32. The graphical user interface of claim 31, wherein the method pool is displayed in a first window of the graphical user interface.

33. The graphical user interface of claim 32, wherein the strategy is displayed in a second window of the graphical user interface.

34. The graphical user interface of claim 31, wherein the method pool displays information related to each of the one or more methods.

35. The graphical user interface of claim 34, when the displayed information includes one or more of:
a method name; and
a method description.

36. The graphical user interface of claim 31, wherein as the cursor control device drags one of the one or more methods of the method pool to the strategy, the method is assigned to the strategy.
